# EUROPÄISCHE PATENTSCHRIFT

(11) **EP 1 840 477 B1**
(45) Veröffentlichungstag und Bekanntmachung des Hinweises auf die Patenterteilung: **19.01.2011**
(21) Anmeldenummer: 07003286.7
(22) Anmeldetag: 16.02.2007
(51) Int. Cl.: F24F 11/047

(54) **Volumenstromregler, insbesondere für klima- und lüftungstechnische Anlagen**
Volume control loop, in particular for air conditioning and ventilation systems
Régulateur de débit volumétrique, en particulier pour des installations de climatisation et de technologies d'aération

(30) Priorität: 31.03.2006 DE 202006005235 U
(43) Veröffentlichungstag der Anmeldung: 03.10.2007
(73) Patentinhaber: TROX GmbH, 47506 Neukirchen-Vluyn (DE)
(72) Erfinder: Sadkowski, Manfred, 47608 Geldern (DE)
(74) Vertreter: DR. STARK & PARTNER

(56) Entgegenhaltungen:
- DE-B- 1 252 395
- DE-U1- 20 214 414
- DE-U1- 29 914 340
- DE-U1-202004 003 811
- FR-A- 1 313 310

## Beschreibung

Die Erfindung betrifft einen Volumenstromregler, insbesondere für klima- und lüftungstechnische Anlagen, mit einer im Inneren eines von einem Medium durchströmten Strömungskanals um eine quer zur Strömungsrichtung ausgerichtete Drehachse schwenkbar gelagerten Regelklappe mit einer vom Volumenstrom angeströmten Anströmfläche, die durch die Drehachse in einen in Strömungsrichtung gesehen vor der Drehachse befindlichen, d.h. anströmseitigen, Regelklappenteilbereich und einen in Strömungsrichtung gesehen hinter der Drehachse befindlichen, d.h. abströmseitigen, Regelklappenteilbereich aufgeteilt ist, wobei die Regelklappe unter Einwirkung des die Regelklappe anströmenden Mediums gegen eine Rückstellkraft aus einer Offenstellung in eine Schließstellung verschwenkbar ist und bei sich verringerndem Volumenstrom des strömenden Mediums durch die Rückstellkraft wieder in die Offenstellung zurückschwenkt.

Aus der Praxis sind derartige Volumenstromregler in verschiedenen Ausführungen bekannt. Sie arbeiten mechanisch selbsttätig, weil das strömungsbedingte Regelklappendrehmoment durch die Rückstellkraft, die üblicherweise durch eine Feder erzeugt wird, kompensiert wird. Bei Änderung der Strömungsverhältnisse ändert sich auch die Schwenkstellung der Regelklappe, so dass so der Volumenstrom selbsttätig in dem Strömungskanal geregelt wird. Die Rückstellkraft kann beispielsweise von einer Feder aufgebracht werden, die so aufgebaut ist, dass die Regelklappe den Volumenstrom bei wechselnden Kanaldrücken konstant hält.

Als Nachteil erweist sich, dass derartige Volumenstromregler in dem Regelbereich von 25 bis 50 Pa (Pascal) aufgrund von Toleranzen nicht die gewünschte Regelgenauigkeit aufweisen.

Aufgabe der Erfindung ist es daher, die vorgenannten Nachteile zu vermeiden und einen Volumenstromregler anzugeben, der auch insbesondere in Regelbereichen von 25 bis 50 Pa(Pascal) eine hinreichend hohe Regelgenauigkeit aufweist.

Diese Aufgabe wird dadurch gelöst, dass der Anteil des anströmseitigen Regelklappenteilbereichs an der gesamten Anströmfläche der Regelklappe größer ist als der Anteil des abströmseitigen Regelklappenteilbereichs an der gesamten Anströmfläche der Regelklappe, wobei der Anteil des anströmseitigen Regelklappenteilbereichs 55% bis 58% der gesamten Anströmfläche der Regelklappe betragen.

Da der in Strömungsrichtung gesehen vor der Drehachse befindliche anströmseitige Regelklappenteilbereich größer als der abströmseitige Regelklappenteilbereich ist, wird damit ein höheres Schließmoment als bei bekannten Volumenstromreglern auf die Regelklappe ausgeübt. Dieses Schließmoment steht der Rückstellkraft entgegen. Durch die erfindungsgemäße Ausgestaltung wird die Regelcharakteristik verbessert, da die Regelklappe bei geringen Kanaldruckänderungen aktiver gegen die Rückstellkraft der Feder wirkt und eine zusätzliche Möglichkeit bietet, um Volumenstromkonstanzen mit engen Toleranzen, auch in Bereichen von 25 bis 50 Pa(Pascal), einzuhalten. Damit reagiert die Regelklappe auch bei niedrigen Volumenströmen und erreicht damit früher ihre Regelposition.

Dies gilt auch für höhere zu regelnde Volumenstrommengen. Denn zur Regelung hoher Volumenströme sind hohe Federkräfte erforderlich, um ein zu frühes Schließen der Regelklappe zu verhindern. Aufgrund der erfindungsgemäßen Aufteilung der Anteile der Regelklappenflächenteilbereiche steht der Rückstellkraft ein größeres Schließmoment und somit eine größere Gegenkraft entgegen.

Der anströmseitige und der abströmseitige Regelklappenteilbereich können selbstverständlich unterschiedliche Formen oder auch Ausgestaltungen bzw. Konturen aufweisen. Auch Ausnehmungen sind innerhalb eines Regelklappenteilbereich denkbar. Relevant ist nur, dass der Anteil des anströmseitigen Regelklappensteilbereichs größer als der des abströmseitigen Regelklappenteilbereichs ist.

Der Querschnitt des Strömungskanals ist beliebig, wobei die Regelklappe hinsichtlich der Ausgestaltung dem Querschnitt des Strömungskanals angepasst ist. In der Schließstellung wird der Strömungskanal nicht vollständig verschlossen, damit bei fallendem Volumenstrom die Regelklappe durch die Rückstellkraft wieder in die Offenstellung verschwenkt werden kann.

Die Materialien sind beliebig. So kann beispielsweise der Strömungskanal aus Metall oder aus Kunststoff sein. Gleiches gilt auch für die anderen Bauteile, wie z.B. die Regelklappe.

Selbstverständlich können zusätzlich die Bewegung der Regelklappe dämpfende Bauteile, wie z.B. ein Balg oder ein Zylinder, vorgesehen sein. Ebenfalls die Ausgestaltung und Anordnung des die Rückstellkraft erzeugenden Bauteils, wie z.B. der Feder, ist beliebig. Auch kann das die Rückstellkraft erzeugende Bauteil entweder im Inneren des Strömungskanals oder aber im Bereich der Außenseite vorgesehen sein. Selbstverständlich kann der Volumenstromregler auch als Einschub ausgebildet sein und damit in einen Strömungskanal eingeschoben werden.

Die Drehachse kann bezogen auf den Querschnitt des Strömungskanals außermittig mit einer Abweichung von bis zu 20% von der Mittellage vorgesehen sein.

Bei einer bevorzugten Ausführungsform kann die Drehachse bezogen auf den Querschnitt des Strömungskanals außermittig mit einer Abweichung von vorzugsweise 5 bis 15% von der Mittellage vorgesehen sein.

Im Folgenden werden in den Zeichnungen dargestellte Ausführungsbeispiele der Erfindung erläutert. Es zeigen:
- Fig. 1: einen Längsschnitt durch einen erfindungsgemä- ßen Volumenstromregler,
- Fig. 2: einen Längsschnitt durch eine andere Ausfüh- rungsform eines erfindungsgemäßen Volumen- stromreglers und
- Fig. 3: einen Längsschnitt durch einen als Einschub ausgebildeten erfindungsgemäßen Volumenstrom- regler.

In allen Figuren werden für gleiche bzw. gleichartige Bauteile übereinstimmende Bezugszeichen verwendet.

In den Figuren sind unterschiedliche Ausführungsformen von Volumenstromreglern mit einer im Inneren eines von einem Medium durchströmten Strömungskanals 1 um eine quer zur Strömungsrichtung (Pfeil 2) ausgerichtete Drehachse 3 schwenkbar gelagerten Regelklappe 4 dargestellt. Jede Regelklappe 4 weist eine entgegen die Strömungsrichtung (Pfeil 2) weisende gesamte Anströmfläche auf, die von dem Volumenstrom angeströmt wird.

Die Drehachse 3 teilt die gesamte Anströmfläche der Regelklappe 4 in einen in Strömungsrichtung (Pfeil 2) gesehen vor der Drehachse 3 befindlichen, d.h. anströmseitigen, Regelklappenteilbereich 4a und einen in Strömungsrichtung (Pfeil 2) gesehen hinter der Drehachse 3 befindlichen, d.h. abströmseitigen, Regelklappenteilbereich 4b auf. Wie den Figuren zu entnehmen ist, ist dabei der anströmseitige Regelklappenteilbereich 4a größer als der abströmseitige Regelklappenteilbereich 4b. Die Drehachse 3 ist dabei bezogen auf den Querschnitt des Strömungskanals 1 außermittig von der Mittellage 5 vorgesehen.

Am Strömungskanal 1 ist um einen Drehpunkt 6 herum verschwenkbar eine Kurvenscheibe 7 gelagert, die mit einer nicht dargestellten Einrichtung zum Fixieren in unterschiedlichen Schwenkstellungen festgelegt werden kann. Zur Verstellung des Sollwertes ist eine Skalierung 8 vorgesehen. Nach Lösen der Einrichtung zum Fixieren kann ein vorgesehener Zeiger 9 und damit die Regelklappe 4 auf den richtigen Sollwert eingestellt werden.

An der Kurvenscheibe 7 ist das eine Ende einer als Feder 10 ausgebildeten Blattfeder befestigt. Das andere Ende der Feder 10 ist gelenkig über eine Verbindungsstange 11 oder ein Verbindungsseil mit der Regelklappe 4 verbunden. Die Regelklappe 4 ist aus ihrer Offenstellung unter der Wirkung der Strömungskräfte des Volumenstroms gegen die Rückstellkraft, die von einer Blattfeder 10 erzeugt wird, in Richtung des Pfeils 12 verschwenkbar.

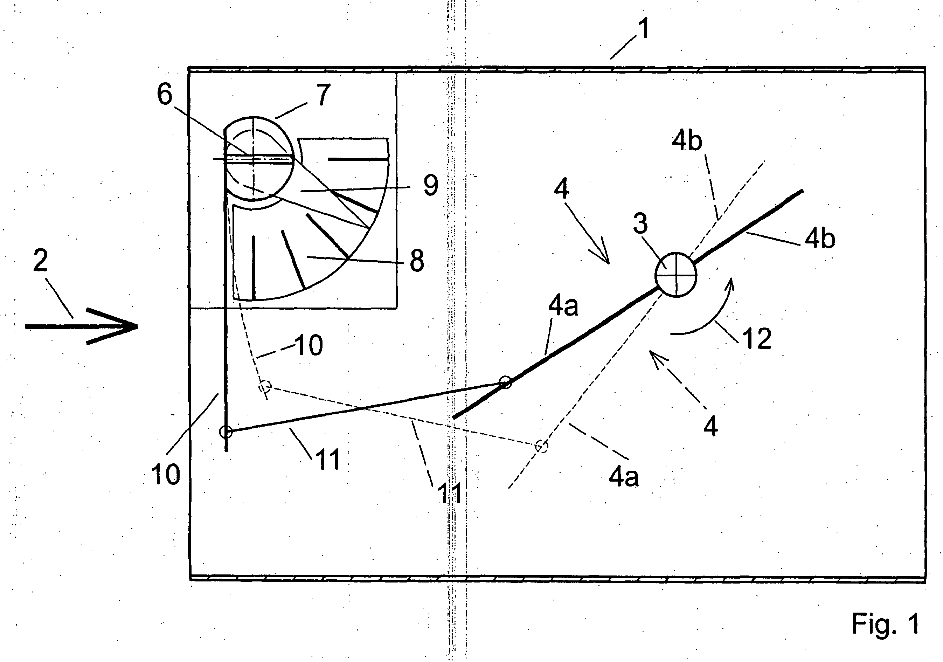

In Fig. 1 ist gestrichelt die Position von Regelklappe 4 und Verbindungsstange 11 einschließlich Feder 10 dargestellt, wenn sich die Regelklappe 4 bereits ein wenig aus ihrer Offenstellung in Richtung ihrer Schließstellung bewegt hat.

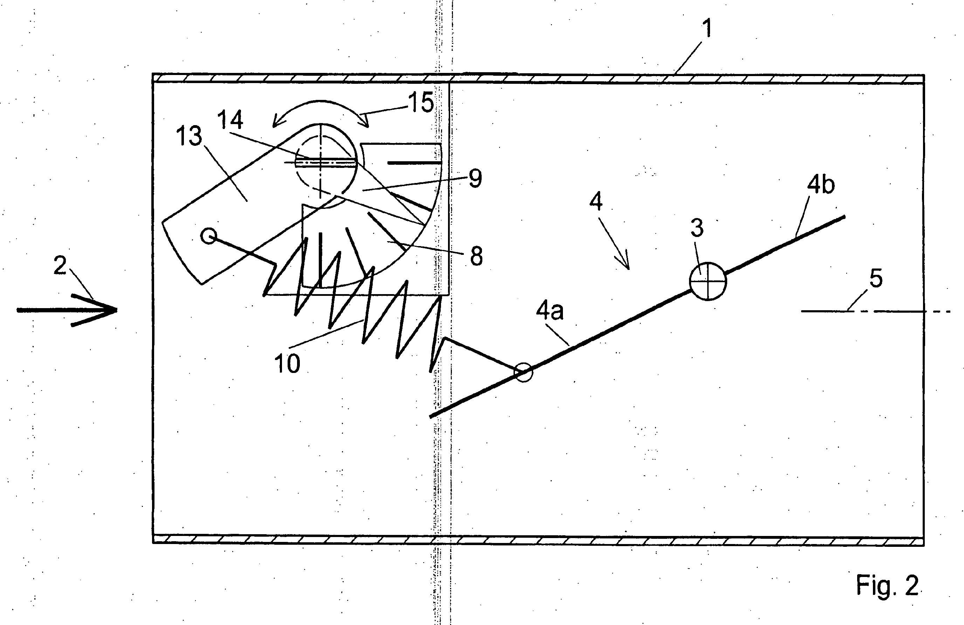

In Fig. 2 wird die Rückstellkraft durch eine Zugfeder aufgebaut, deren eines Ende an der Regelklappe 4 angreift. Das andere Ende greift an einem Hebelarm 13 an, der über eine drehbare Befestigung 14 mit dem Strömungskanal 1 verbunden ist. Der Hebelarm 13 kann in Richtung des Pfeils 15 zur Verstellung des Sollwertes verstellt werden. Eine Skalierung 8 und ein entsprechend am Hebelarm 13 montierter Zeiger 9 erlauben die richtige Einstellung des Sollwertes.

Der Hebelarm 13 kann im Inneren des Strömungskanals 1 vorgesehen sein. Dann ist im Bereich der Befestigung 14 eine Ausnehmung in dem Strömungskanal 1 vorgesehen, so dass von außerhalb des Strömungskanals 1 die Befestigung 14 zur Veränderung des Sollwertes verstellt werden kann.

Selbstverständlich ist es auch möglich, dass der Hebelarm 13 außerhalb des Strömungskanals 1 zur einfachen Verstellung angeordnet ist. Dann greift die Feder 10 nicht direkt an dem anströmseitigen Regelklappenteilbereich 4a an. Vielmehr erstreckt sich bei einer solchen Ausführungsform die Drehachse 3 aus dem Strömungskanal 1 heraus und weist endseitig beispielsweise einen Hebelarm auf, an dem die Feder 10 angreift.

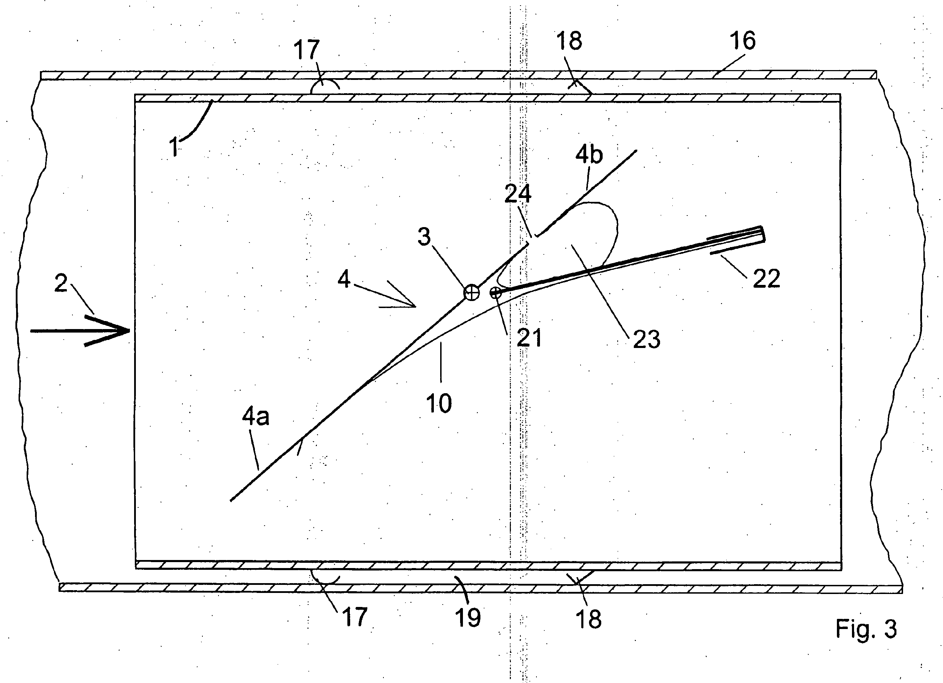

In Fig. 3 ist der Volumenstromregler als Einschub ausgebildet. Damit der Volumenstromregler in einem Kanalabschnitt 16 fixiert werden kann, sind außenseitig als Fixiereinrichtung ausgebildete Krampen 17 vorgesehen. Diese sind federnd ausgebildet, so dass der Volumenstromregler leicht in den Kanalabschnitt 16 eingeführt und auch wieder leicht entnommen werden kann. Zusätzlich ist als Dichtung eine gegen die Strömungsrichtung (Pfeil 2) weisende Dichtlippe 18 vorgesehen, so dass der zwischen dem Volumenstromregler und dem Kanalabschnitt 16 verbleibende ringförmige Spalt 19 abgedichtet ist.

Auf der Abströmseite der Regelklappe 4 befindet sich ein Anschlag 20, der die Offenstellung der Regelklappe 4 begrenzt. Der Anschlag 20 ist in dem dargestellten Ausführungsbeispiel um eine Drehachse 21 drehbar gelagert, wobei die Drehachse 21 in geringem Abstand zu der Drehachse 3 der Regelklappe 4 und in etwa mittig bezogen auf die Mittellage 5 des Strömungskanals 1 angeordnet ist.

Bei dem in Fig. 3 dargestellten Ausführungsbeispiel wird die Rückstellkraft ebenfalls von einer als Blattfeder 10 ausgebildeten Rückstelleinrichtung erzeugt. Die Blattfeder 10 ist endseitig mittels eines Clips 22 an dem der Drehachse 21 des Anschlages 20 abgewandten Endes des Anschlages 20 aufgeclipst. Zur Fixierung der Position des Anschlages 20 kann beispielsweise endseitig an zumindest einem durch den Strömungskanal 1 hindurchfassenden Ende der Drehachse 21 ein Gewinde vorgehen sein, auf das eine Schraube aufgeschraubt wird. Zur späteren Veränderung der relativen Lage des Anschlages 20 bedarf es lediglich eines Lösens der Schraube. Andere Fixiereinrichtungen sind selbstverständlich denkbar.

Aufgrund des geringen Abstandes zwischen der Drehachse 21 des Anschlages 20 und der Drehachse 3 der Regelklappe 4 wird bei Veränderung der relativen Lage des Anschlags 20 durch Verdrehen die Federcharakteristik der Blattfeder 10 nur geringfügig verändert. Selbstverständlich ist es auch möglich, dass die Drehachse 3 der Regelklappe 4 und die Drehachse 21 des Anschlages 20 zusammenfallen, so dass bei Veränderung der relativen Lage des Anschlages 20 die Federcharakteristik nahezu unverändert bleibt.

Zur Dämpfung der Regelklappe 4 infolge plötzlicher Volumenstromschwankungen innerhalb des Strömungskanals 1 ist auf der Abströmseite der Regelklappe 4 ein Balg 23 angeordnet. Der Balg 23 weist eine Einlassöffnung 24 auf, die im Bereich der Anströmseite auf dem abströmseitigen Regelklappenteilbereich 4b der Regelklappe 4 vorgesehen ist.

## Patentansprüche

1. Volumenstromregler, insbesondere für klima- und lüftungstechnische Anlagen, mit einer im Inneren eines von einem Medium durchströmten Strömungskanals (1) um eine quer zur Strömungsrichtung (Pfeil 2) ausgerichtete Drehachse (3) schwenkbar gelagerten Regelklappe (4) mit einer vom Volumenstrom angeströmten Anströmfläche, die durch die Drehachse (3) in einen in Strömungsrichtung (Pfeil 2) gesehen vor der Drehachse (3) befindlichen, d.h. anströmseitigen, Regelklappenteilbereich (4a) und einen in Strömungsrichtung (Pfeil 2) gesehen hinter der Drehachse (3) befindlichen, d.h. abströmseitigen, Regelklappenteilbereich (4b) aufgeteilt ist, wobei die Regelklappe (4) unter Einwirkung des die Regelklappe (4) anströmenden Mediums gegen eine Rückstellkraft aus einer Offenstellung in eine Schließstellung verschwenkbar ist und bei sich verringerndem Volumenstrom des strömenden Mediums durch die Rückstellkraft wieder in die Offenstellung zurückschwenkt, **dadurch gekennzeichnet, dass** der Anteil des anströmseitigen Regelklappenteilbereichs (4a) an der gesamten Anströmfläche der Regelklappe (4) größer ist als der Anteil des abströmseitigen Regelklappenteilbereichs (4b) an der gesamten Anströmfläche der Regelklappe (4), **wobei**
der Anteil des anströmseitigen Regelklappenteilbereichs (4a) 55% bis 58% der gesamten Anströmfläche der Regelklappe (4) ist.

2. Volumenstromregler nach dem vorhergehenden **Anspruch, dadurch gekennzeichnet, dass** die Drehachse (3) bezogen auf den Querschnitt des Strömungskanals (1) außermittig mit einer Abweichung von bis zu 20 % von der Mittellage (5) vorgesehen ist.

3. Volumenstromregler nach dem vorhergehenden Anspruch, **dadurch gekennzeichnet, dass** die Drehachse (3) bezogen auf den Querschnitt des Strömungskanals (1) außermittig mit einer Abweichung von vorzugsweise 5 bis 15% von der Mittellage (5) vorgesehen ist.

## Claims

1. Volume flow controller, particularly for air-conditioning and ventilation systems, with a flow control valve (4) with a swivelling bearing axis (3) aligned normal to the direction of flow (arrow 2) inside of a flow channel (1) through which a medium flows, with an airflow surface over which the volume flows, which is divided by the swivelling bearing axis (3) into a control valve area (4a) in front of the swivelling bearing axis (3) viewed in the direction of flow (arrow 2), i.e. an upstream area, and a control valve area (4b) behind the swivelling bearing axis (3) viewed in the direction of flow (arrow 2), i.e. a downstream area, whereby the flow control valve (4) can be swivelled from the open position to the closed position by a restoring force under effect of the medium flowing over the flow control valve (4) and for a reduced volume flow of the flowing medium is swivelled back into the open position again by the restoring force, **characterised by**: the portion of the upstream control valve area (4a) over the entire airflow surface of the flow control valve (4) being larger than the portion of the downstream control valve area (4b) over the entire airflow surface of the flow control valve (4) **whereby** the portion of the upstream control valve area (4a) represents 55% to 58% of the entire airflow surface of the flow control valve (4).

2. Volume flow controller according to the preceding **claim, characterised by** provision being made for the swivelling axis (3), with reference to the cross section of the flow channel (1), to be off centre by up to 20% off the centre position (5).

3. Volume flow controller according to the preceding **claim, characterised by** provision being made for the swivelling axis (3), with reference to the cross section of the flow channel (1), to be off centre by preferably 5% to 15% off the centre position (5).

## Revendications

1. Régulateur de débit volumique, en particulier pour des installations techniques de climatisation et de ventilation, avec un volet de régulation (4) qui est monté pivotant autour d'un axe de rotation (3) dirigé transversalement à la direction d'écoulement (flèche 2) à l'intérieur d'un canal d'écoulement (1) parcouru par un fluide et qui comporte une surface d'attaque exposée au débit volumique, laquelle est divisée par l'axe de rotation (3) en une partie de volet de régulation (4a) se trouvant devant l'axe de rotation (3) vu dans la direction d'écoulement (flèche 2), c'est-à-dire côté amont, et en une partie de volet de régulation (4b) se trouvant derrière l'axe de rotation (3) vu dans la direction d'écoulement (flèche 2), c'est-à-dire côté aval, le volet de régulation (4) pouvant pivoter, contre une force de rappel, d'une position ouverte dans une position fermée sous l'action du fluide arrivant sur le volet de régulation (4) et, lorsque le débit volumique du fluide affluant diminue, pivotant en retour dans la position ouverte sous l'action de la force de rappel, **caractérisé en ce que** la contribution de la partie de volet de régulation côté amont (4a) à la surface d'attaque totale du volet de régulation (4) est plus grande que la contribution de la partie de volet de régulation côté aval (4b) à la surface d'attaque totale du volet de régulation (4), la contribution de la partie de volet de régulation côté amont (4a) étant de 55 % à 58 % de la surface d'attaque totale du volet de régulation (4).

2. Régulateur de débit volumique selon la revendication précédente, **caractérisé en ce que** l'axe de rotation (3) est, rapporté à la coupe transversale du canal d'écoulement (1), prévu excentré avec un écart par rapport à la position centrale (5) pouvant aller jusqu'à 20 %.

3. Régulateur de débit volumique selon la revendication précédente, **caractérisé en ce que** l'axe de rotation (3) est, rapporté à la coupe transversale du canal d'écoulement (1), prévu excentré avec un écart par rapport à la position centrale (5) allant de préférence de 5 à 15 %.
